# EUROPEAN PATENT SPECIFICATION

(11) **EP 4 511 340 B1**
(45) Date of publication and mention of the grant of the patent: **09.12.2026**
(21) Application number: 23726198.7
(22) Date of filing: 17.04.2023
(51) Int. Cl.: C04B 7/153, C04B 14/04, C04B 28/00, C04B 111/00

(54) **ALKALI ACTIVATED BINDER AND PRODUCTS AND USES THEREOF**
ALKALIAKTIVIERTE BINDEMITTEL UND PRODUKTE UND VERWENDUNGEN DAVON
LIANT ALCALI-ACTIVÉ ET PRODUITS AINSI QUE LEURS UTILISATIONS

(30) Priority: 20.04.2022 NO 20220452; 05.04.2023 NO 20230387
(43) Date of publication of application: 26.02.2025
(73) Proprietor: RESTONE AS, 4006 Stavanger (NO)
(72) Inventor: KVASSNES, Astri, 5259 Hjellestad (NO); SURYANTO, Benny, Edinburgh EH14 4AS (GB)
(74) Representative: Acapo Onsagers AS
(86) International application number: PCT/NO2023/050085
(87) International publication number: WO 2023/204717

(56) References cited:
- FASIHNIKOUTALAB MOHAMMAD HAMED ET AL: "Sustainable soil stabilisation with ground granulated blast-furnace slag activated by olivine and sodium hydroxide", ACTA GEOTECHNICA, SPRINGER BERLIN HEIDELBERG, BERLIN/HEIDELBERG, vol. 15, no. 7, 30 November 2019 (2019-11-30), pages 1981 - 1991, XP037169901, ISSN: 1861-1125, [retrieved on 20191130], DOI: 10.1007/S11440-019-00884-W
- FASIHNIKOUTALAB MOHAMMAD HAMED ET AL: "Utilization of Alkali-Activated Olivine in Soil Stabilization and the Effect of Carbonation on Unconfined Compressive Strength and Microstructure", JOURNAL OF MATERIALS IN CIVIL ENGINEERING, vol. 29, no. 6, 1 June 2017 (2017-06-01), US, XP093083205, ISSN: 0899-1561, Retrieved from the Internet <URL:https://purehost.bath.ac.uk/ws/portalfiles/portal/190328913/2016_Fasihnikoutalab_J_Mat_Civil_Eng_PURE.pdf> [retrieved on 20230919], DOI: 10.1061/(ASCE)MT.1943-5533.0001833
- ACHANG MERCY ET AL: "Adding olivine micro particles to Portland cement based wellbore cement slurry as a sacrificial material: A quest for the solution in mitigating corrosion of wellbore cement", CEMENT AND CONCRETE COMPOSITES, ELSEVIER APPLIED SCIENCE, BARKING, GB, vol. 121, 10 May 2021 (2021-05-10), XP086611420, ISSN: 0958-9465, [retrieved on 20210510], DOI: 10.1016/J.CEMCONCOMP.2021.104078

## Description

### Field of the Invention

The invention relates to the field of alkali activated binder and products and uses thereof. More specifically, the invention relates to a process for preparing a alkali activated binder mixture, an alkali activated binder mixture, an alkali activated binder mixture obtained by the process, use of the alkali activated binder mixture, a method of making an alkali activated binder slurry, an alkali activated binder slurry obtained by the method, use of the alkali activated binder slurry, a process for making a concrete structure from the alkali activated binder slurry and a concrete structure obtained by the process.

### Background of the Invention

The present invention relates to the field of cementitious materials such as Portland cement, pozzolans and alkali activated binders. In particular, the field of cementitious materials created by silicates that are alkali activated binders, often commonly given the commercial designation geopolymers.

"Solid-solution minerals" is a term of the art in geological and mineralogical sciences. These are often silicate systems that have ions with the similar size and valence state that can occupy the same place in the mineral. This is called substitution and may occur over the complete range of possible compositions. In natural earth-based systems, one ion may have higher concentrations present than the other ion.

As one example is "divalent magnesium-iron solid solution silicates". A common short-hand term for divalent magnesium-iron solid solution silicates in the art is "magnesium-iron silicates". Magnesium-iron silicates have variable compositions due to "solid-solution" chemistry mainly involving Mg²⁺ and Fe²⁺ ions. These are silicate systems where iron and magnesium ions can occupy the same place in the mineral. This is called substitution and can occur over the complete range of possible compositions because iron and magnesium have a similar atomic radius (Fe⁺² = 0.78 Å and Mg⁺² = 0.72 Å) and can have the same valence state (2+). In natural earth-based systems, there are more magnesium ions than iron ions present.

As one example of a divalent magnesium-iron solid solution silicate, is olivine, often given as: (Mg,Fe)₂SiO₄. To one skilled in the art, olivine can be thought of as a mixture of Mg₂SiO₄ (forsterite - Fo) and Fe₂SiO₄ (fayalite - Fa). If there is more forsterite than fayalite (thus more magnesium than iron), it can be referred to as a magnesium-iron silicate. If there was more fayalite than forsterite, then it can be referred to as an iron-magnesium silicate.

As another example, clinopyroxenes have the general formula (Ca,Mg,Fe²⁺,Fe³⁺,Ti,Al)₂[(Si,Al)₂O₆]. The most commonly occurring clinopyroxene is called augite, which has the generalised formula CaₓMg_{y}Fe_{z})(Mg_{y1}Fe_{z1})Si₂O₆, where 0.4 ≤ x ≤ 0.9, x+y+z=1 and y1+z1=1. Augite is a common rock forming mineral in the lower ocean crust and in refractory intrusions of magmas in the continents.

Another example is a sodium rich type of clinopyroxene is called omphacite, which is a clinopyroxene solid solution of jadeite (Na(Al,Fe³⁺)Si₂O₆), augite (above), and aegirine (NaFe³⁺Si₂O₆). Omphacite thus has the generalised solid solution formula (NaₐCa_{b}Fe²⁺_{c}Mg_{d})(AlₑFe³⁺_{f}Fe²⁺_{g}Mgₕ)Si₂O₆, where a+b+c+d = 1; e+f+g=h = 1; a = e+f; 0.2 ≤ a ≤ 0.8; e > f, and is a common rock-forming mineral in the highly metamorphosed naturally occurring rock type eclogite, together with the Mg rich garnet types like pyrope and almandine.

As another example, the formula for orthopyroxene is often given as: (Mg,Fe)₂Si₂O₆. To one skilled in the art, orthopyroxene can be thought of as a mixture of Mg₂Si₂O₆ (enstatite - En) and Fe₂Si₂O₆ (ferrosilite - Fs). Orthopyroxenes always have some Mg present in nature and pure ferrosilite is only made artificially. Orthopyroxene with more Mg than Fe is referred to as a magnesium-iron silicate. If there was more ferrosilite than enstatite, then it can be referred to as an iron-magnesium silicate.

As another example is amphiboles that have the general formula (Ca,Na)₂₋₃(Mg,Fe,Al)₅(Al,Si)₈O₂₂(OH,F)₂. Exhibiting an extensive range of possible cation substitutions, amphiboles crystallize in both igneous and metamorphic rocks with a broad range of bulk chemical compositions. Because of their relative instability to chemical weathering at the earth's surface, amphiboles make up only a minor constituent in most sedimentary rocks. Amphiboles are composed of double chain SiO₄ tetrahedra, connected at the vertices and normally containing ions of iron and/or magnesium in their systems.

As an example of rock forming oxides are titanomagnetites including ilmenite (Fe²⁺TiO₃), ulvoespinel (TiFe₂O₄), magnetite (Fe²⁺Fe³⁺₂O₄), haematite (Fe₂O₃), and their solid solution combinations. Oxides are only solid-solutions at higher temperatures and tend to exsolve at lower temperatures, occurring together as trellis twins and sandwich structures in the minerals we observe.

An example of the felsic minerals are the feldspars and the nephelines. Feldspars are a group of rock-forming aluminium tectosilicate minerals, containing sodium, calcium, potassium, or barium. The plagioclase feldspars are triclinic. A common short-hand term in the art for plagioclase is "calcium-sodium aluminium silicates". The solid solution mineral plagioclase feldspar ranging from anorthite (CaAl₂Si₂O₈, "An") to albite (NaAlSi₃O₈, "Ab"). Nepheline, also called nephelite is a rock-forming mineral in the feldspathoid group - a silica-undersaturated aluminosilicate, Na₃KAl₄Si₄O₁₆, that occurs in intrusive and volcanic rocks with low silica, and in their associated pegmatites.

Alkali activated binders (AAB) have emerged as an alternative to ordinary Portland cement (OPC) binders, which seems to have superior durability and environmental impact. Alkali activated binders are generally produced by activating an aluminosilicate precursor (AP) with an alkali medium activator. The most common types of activators used for AAB are sodium silicate and/or sodium hydroxide. AABs can be solitary (one source of AP), binary (two sources of AP) and with even more sources of AP. Further, it is common to separate between alkali-activated binders based on calcium-rich raw materials and alkali-activated materials based on low-calcium raw materials.

Geopolymers are using low-calcium aluminosilicate precursors for alkali-activated binders. Geopolymers may be a commercially designated name for alkali activated binders. Geopolymers tend to have much higher aluminium contents than AABs and create zeolite structures in the structure to make a strong interlinked network. Low-calcium or calcium-free precursors are mainly fly ash or clay-based raw materials, which allow to develop strong and durable binder systems.

High-calcium aluminosilicate precursors are for example ground granulated blast furnace slag and other calcium-rich industrial by-products.

RU2383504C1 discloses a binder contains the following components, wt %: blast-furnace slag 23.8-65.1; magmatic rock - granite or gabbro-diabase, or peridotite, 24.1-63.0; liquid glass - sodium, potassium or their mixture, 10.0-12.0; sodium or potassium hydroxide 0.8-1.2.

US4132559 discloses a starting material for the manufacture of shaped and hydrothermally hardened products is composed of a binding agent comprising finely-divided olivine having a specific outer surface of at least 25 000 cm2/cm3, measured according to the permeability method, and finely-divided silica material in a quantity which is at most equal to the solid volume of said olivine and a ballast material in an amount of 50 - 80% by volume of the starting material and comprising particulate ultra-basic rock or slag material having a particle size of 80% smaller than 200 - 1000 µm.

Fasihnioutalabet al., "Sustainable soil stabilisation with ground granulated blast-furnace slag activated by olivine and sodium hydroxide", Acta Geotechnica, 2020, 15, page 1981-1991, discloses the use of ground granulated blast-furnace slag (GGBS), activated with olivine (Mg₂SiO₄) and sodium hydroxide (NaOH), to stabilise a clayey soil. There was a strength increase that was attributed to the reaction between the NaOH and the olivine.

It would be desirable to provide new and improved alkali activated binders. It would also be desirable to provide new, cost-efficient and low emission alkali activated binders that may be used as a glue, sealant, and structural and building materials, e.g., in concrete structures which also may contain aggregates and fillers, in which the binder and concrete can be designed to provide strong, flexible and/or quick setting bonds, structures and constructions. Further, it would be desirable to provide new and improved alkali activated binders which can be prepared from a combination of two or more sources of aluminium silicate precursors.

FASIHNIKOUTALAB MOHAMMAD HAMED ET AL: "Sustainable soil stabilisation with ground granulated blast-furnace slag activated by olivine and sodium hydroxide" ACTA GEOTECHNICA, SPRINGER BERLIN HEIDELBERG, BERLIN/HEIDELBERG, vol. 15, no. 7, 30 November 2019, pages 1981 to 1991 describes ground granulated blast-fumace slag (GGBS), activated with olivine (Mg2SiO4) and sodium hydroxide (NaOH), was used to stabilise a clayey soil. Fasihnikoutalab Mohammad Hamed ET AL: "Utilization of Alkali-Activated Olivine in Soil Stabilization and the Effect of Carbonation on Unconfined Compressive Strength and Microstructure" JOURNAL OF MATERIALS IN CIVIL ENGINEERING, vol. 2, no. 6, 1 June 2017 describes stabilisation of soil using olivine and the application of novel techniques utilising alkaline activation and carbonation. ACHANG MERCY ET AL: "Adding olivine micro particles to Portland cement based wellbore cement slurry as a sacrificial material: A quest for the solution in mitigating corrosion of wellbore cement" CEMENT AND CONCRETE COMPOSITES, ELSIVIER APPLIED SCIENCE, BARKING, GB, vol.121, 10 May 2021 describes characterization of the pH variation of olivine microparticles (30-90 µm) in simulated subsurface fluids, and reaction in high pH Portland cement, w/c ratio 0.404 cured for 3weeks, all at 90 °C and 95% RH.

### Summary of the Invention

Provided is a process according to claim 1 and an alkali activated binder mixture according to claim 2.

It is an object of the present invention to apply, as a precursor, ultramafic rock, e.g. peridotites and eclogites, which contain divalent magnesium-iron solid solution silicates (for example the mineral groups olivine, orthopyroxene, amphibole, and serpentine), here called "magnesium-iron silicates", as a source of silicate and magnesium that results from the reaction, mixed with an aluminosilicate precursor that is a source of Ca, Al and Si; to mix these precursors with very caustic substances like NaOH, KOH, waterglass and sodium metasilicates, mix it with water, to a blend that will set and strengthen during ambient and elevated temperatures.

It is another object of the invention to provide such blends which are suitable to be mixed with fillers and aggregates, creating a cost-efficient, low emission binders that may be used as a glue, a sealant, and structural and building materials and more.

It is another object of the invention to provide low calcium aluminosilicate precursors from one of or a combination of nepheline syenite, albite, partially melted nepheline syenite or albite and glass made from nephelite syenite or albite, e.g., all finely ground.

It is yet another object of the to provide a_high calcium aluminosilicate precursor as and/or from finely ground feldspars and nepheline syenite, or partially melted (calcined) plagioclase feldspars, finely ground. The reaction mechanism of alkali-activated compounds is still not completely understood because the solidification and setting mechanisms are very dependent on the raw materials and the alkaline solution used. The combination of high- and low-calcium aluminosilicate precursor with an ultramafic rock is advantageous.

It is yet another object of the invention to provide alkali activated binders (AAB) from crushed crystalline ultramafic rocks together with one or more sources of aluminium silicate precursors with one or more alkali activators to create a binder that may be used in concrete structures that also may contain aggregates and fillers. This binder and concrete can be designed to be strong, flexible, or quick setting, dependent on the blend used.

It is yet another object of the invention to provide one combination of low (room) temperature cured alkali activated binder with ultramafic rocks and a high-calcium aluminosilicate precursor, and one combination of higher temperature cured alkali activated binder with ultramafic rocks and a low-calcium aluminosilicate precursor.

It is yet another object of the invention to provide improved binder mixtures and slurries resulting in reduced CO₂ emission when subjected to casting and curing, which binder mixtures and slurries can be used to prepare improved concrete structures exhibiting high or improved strength properties, including compressive strength, and/or reduced CO₂ emission.

The binder of the present invention may be blended in dry or wet form. It can also be blended with aggregates. Furthermore, it is possible to set the binder without external heating. The ingredients do not require any heating. In addition, it possible to use waste materials in the present binder which are less used in prior art geopolymers. The CO₂ emissions resulting from the binder is extremely low, as low as 8% of the standard Portland concrete of today.

Accordingly, in one aspect, the present invention relates to a process for preparing an alkali activated binder mixture comprising mixing:
(i) 50 to 90% by weight of ultramafic rock, based on the weight of the binder mixture;
(ii) 5 to 50% by weight of aluminosilicate precursor, based on the weight of the binder mixture, wherein the aluminosilicate precursor is vitreous and/or fine grained ground granulated blast-furnace slag, recycled glass, calcined nepheline, calcined metakaolin calcined anorthosite and/or calcined gabbro; and
(iii) an alkali activator,

wherein the ultramafic rock and the aluminosilicate precursor are present in an amount of less than or equal to 95% by weight of the binder mixture,
wherein the alkali activator dosage (R) is between 3 and 14, where R is given by the mass ratio: $R = \frac{Mass of {Na}_{2} O or {K}_{2} O in the alkali activator \times 100}{Mass of the binder mixture}$
and wherein the activator modulus (M) is between 0 and 3, where M is given by the mass ratio: $M = \frac{{SiO}_{2}}{{Na}_{2} O} or \frac{{SiO}_{2}}{{K}_{2} O} .$

In another aspect, the present invention relates to an alkali activated binder mixture comprising:
(i) 50 to 90% by weight of ultramafic rock, based on the weight of the binder mixture;
(ii) 5 to 50% by weight of aluminosilicate precursor, based on the weight of the binder mixture, wherein the aluminosilicate precursor is vitreous and/or fine grained ground granulated blast-furnace slag, recycled glass, calcined nepheline, calcined metakaolin calcined anorthosite and/or calcined gabbro; and
(iii) an alkali activator;

wherein the ultramafic rock the aluminosilicate precursor are present in an amount of less than or equal to 95% by weight of the binder mixture;
wherein the alkali activator dosage (R) is between 3 and 14, where R is given by the mass ratio: $R = \frac{Mass of {Na}_{2} O or {K}_{2} O in the alkali activator \times 100}{Mass of the binder mixture ,}$
and wherein the activator modulus (M) is between 0 and 3, where M is given by the mass ratio: $M = \frac{{SiO}_{2}}{{Na}_{2} O} or \frac{{SiO}_{2}}{{K}_{2} O} .$

Another aspect, which is not claimed, relates to an alkali activated binder mixture comprising:
(i) 50% to 100% by weight of ultramafic rock, based on the weight of the binder mixture,
(ii) 0% to 60% by weight of aluminosilicate precursor, based on the weight of the binder mixture, and
(iii) an alkali activator dosage (R) between 1 and 14, an activator modulus (M) between 0 and 3, and/or between 5 and 17.5% by weight of sodium monosilicate, based on the weight of the binder mixture,
wherein the alkali activated binder mixture is dry and comprises less than 12% by weight of free water, based on the weight of the binder mixture.

Another aspect, which is not claimed, relates to a binder mixture obtainable by the process of the invention.

In a further aspect, the present invention relates to the use of the binder mixture of the invention for preparing an alkali activated binder slurry.

A further aspect, which is not claimed, relates to a method of preparing an alkali activated binder slurry comprising mixing the alkali activated binder mixture of the invention with water.

A further aspect, which is not claimed, relates to an alkali activated binder slurry obtainable by the method of the invention.

Another aspect, which is not claimed, relates to the use of the alkali activated binder slurry of the invention for making a concrete structure.

Another aspect, which is not claimed, relates to a process for making a concrete structure comprising:
a) providing an alkali activated binder slurry of the invention,
b) pouring the alkali activated binder slurry into a form,
c) curing the binder slurry.

Another aspect, which is not claimed, relates to a concrete structure obtainable by the process of the invention.

These and other objects and aspects of the invention will be described in further detail hereinafter.

### Detailed Description of the Invention

Reference will now be made in detail to the present invention and embodiments thereof. This invention may, however, be embodied in many different forms and should not be construed as limited to the embodiments set forth herein. These embodiments are provided by way of illustration only. Several further embodiments, or combinations of the presented embodiments, will be within the scope of one skilled in the art.

The present invention generally relates to an alkali activated binder mixture, an alkali activated binder slurry comprising the alkali activated binder mixture, a method of making a concrete structure from the alkali activated binder slurry, and a concrete structure obtainable by the method.

The term "alkali activated binder", as used herein, sometimes referred to as an "alkaline activated binder", refers to a binder that contains one or more mineral components that comprises aluminium and silicon oxides, with one or more activators. The term "activator", as used herein, refers to a source of alkali metal ions and causes high pH conditions. The activators may include alkali silicates, hydroxides, sulphates, or carbonates.

The term "alkali activated concrete", as used herein, refers to an alkali activated binder mixed with water and aggregates, e.g., fine and/or coarse aggregates, and they may also contain chemical admixtures that contributes to the desired utilisation of the end material, and that suits the activator that was used.

The term "cement", as used herein, refers to a binder. The term "concrete", as used herein, refers to a composite material resulting from the mixing and hardening of a binder with water together with aggregates, e.g., filler, sand and gravel. Concrete is often reinforced for additional strength and flexibility by adding structures to them, like fiber and steel.

Inorganic materials that have pozzolanic or latent hydraulic binding effects are commonly used in cementitious materials. The term "hydraulicity", as used herein, refers to the property of limes and cements to set and harden under water whether derived from a naturally hydraulic lime, cement or a pozzolan. The term "latent hydraulic binder", as used herein, refers to a binder that reacts more slowly and due to a trigger in a particular manner to change the properties of the cementitious products. It will come to a full strength on its own, while very slowly. Latent hydraulic binders have the purpose of either stretching the need for lime clinker in the cementitious mineral admixture or improve the properties of the cementitious mineral admixture.

As an example of the vitreous/glassy/micro-grained materials that has been used as such additives: at least one of GGBS. Other examples can be calcined calcium-aluminium-silicate, plagioclase, alkali-feldspar, nepheline, olivine, mullite, talc, oxide minerals, fly ash, bottom ash, magnesite, Bayer process waste, acidic waste streams generated during extraction of copper from copper ore, or waste streams containing silicate and aluminate minerals, and mixtures thereof.

The term "aggregate", as used herein, refers to crushed, sedimentary or recycled rocks that usually have a size from gravel via sand to filler. Examples of aggregates and fillers include crushed concrete. Aggregates can be natural aggregates, crushed rock aggregates, artificial aggregates, and recycled aggregates. Further, aggregates can be coarse aggregates and fine aggregates based on their unit weight.

Aggregates can be classified based on shape. They can be rounded aggregate, irregular aggregates, angular aggregates, flaky aggregates, elongated aggregates, and flaky and elongated aggregates. Aggregates can be made from gneiss, granite, gabbro, gabbro syenite, syenite, anorthosite, aplite, basalt, dolerite and diabase, granodiorite, harzburgite, lherzolite, wehrlite, hornblendite, monzogranite, nephelinite, nepheline syenite, peridotite, quartz diorite, quartz syenite, syenite, tonalite, troctolite, trondhjemite, websterite, arkose, breccia, chalk, dolomite, greywacke, flint, gritstone, sandstone, shale, turbidite, wackenstone and graywacke, amphibolite, eclogite, granulite, greenschist, greenstone, marble, migmatite, quartzite, schist, serpentinite, slate, rhomb porphyry, as well as from recycled previously formed concrete.

The term "calcination", as used herein, refers to thermal treatment of a solid chemical compound whereby the compound is raised to high temperature without melting under restricted supply of ambient oxygen (i.e., gaseous O₂ fraction of air), to incur thermal decomposition.

The term "olivine", as used herein, refers to a rock forming mineral in the naturally occurring rock types like the mantle rock- and crustal cumulate rock dunite (>90% olivine), and lesser constituent in rocks mentioned below. The term "serpentinite", as used herein, refers to metamorphosed dunite that has been hydrated.

The term "clinopyroxene", as used herein, refers to a naturally occurring rock forming mineral and rock types like clinopyroxenite (90% clinopyroxene), websterite (at least 90% clinopyroxene and orthopyroxene combined), wehrlite (olivine and clinopyroxene together), gabbro (feldspar and clinopyroxene), olivine gabbro (gabbro with minor olivine), oxide olivine gabbro (gabbro with minor oxides and olivine), as well as present in the mantle as iherzolite (orthopyroxene, clinopyroxene and olivine).

The term "orthopyroxene", as used herein, refers to a rock forming mineral in the naturally occurring mantle rock type harzburgite (olivine and orthopyroxene) as well as in the naturally occurring lower crustal ocean rock or continental intrusive rock norite (consisting of >90% total feldspar and orthopyroxene combined), as well as orthopyroxenite when it occurs nearly on its own.

The term "peridotite", as used herein, refers to a rock type group that typically consists of a combination of olivines and pyroxenes, harzburgite, iherzolite, websterite, wehrlite, clinopyroxenite and orthopyroxenite. Peridotites are the dominate rock types of the earth's upper mantle.

The term "eclogite", as used herein, refers to a dense silicic metamorphic rock altered at high temperatures and pressures. The rock type generally consists of almandine garnet and the pyroxene omphacite.

The terms "komatiite", "picrite" and "kimberlite", as used herein, refer to types of mantle-derived ultramafic volcanic rocks.

The term "ultramafic rock", as used herein, refers to a group of rocks consisting of dunites, peridotites, serpentinites, picrites, komateiites, kimberlites, pyroxenites and/or eclogites. According to the invention, the ultramafic rock is suitably selected from peridotite and/or eclogite, preferably the peridotite and/or eclogite is in the form of olivine, orthopyroxene, clinopyroxene, omphacite, serpentine, and/or amphibole. Preferably, the ultramafic rock is olivine.

The term "nepheline syenite", as used herein, refers to the main minerals, which are alkali feldspar and nepheline, in association with clinopyroxene (±) amphibole (±) and (±) biotite.

The term "anorthosite", as used herein, refers to a rock type predominantly made up from plagioclase feldspars (90-100%) with a minimal mafic component (0-10%). These are phaneritic, intrusive igneous rocks. Pyroxene, ilmenite, magnetite, and olivine are the mafic minerals most commonly present.

According to the invention, the aluminosilicate precursor may be selected from vitreous and/or fine grained ground granulated blast-furnace slag (GGBS), recycled glass, calcined nepheline, calcined metakaolin calcined anorthosite and/or calcined gabbro, preferably from ground granulated blast-furnace slag (GGBS).

The term "Ground Granulated Blast-furnace Slag", which is abbreviated as "GGBS", as used herein, refers to a waste slag that is a by-product from the blast-furnaces used to make iron. GGBS is a source of Si, Al, and Ca in ground vitreous or fine-grained form cementitious material.

The term "fly ash", as used herein, refers to a coal combustion product that is composed of the particulates (fine particles of burned fuel) that are driven out of coal-fired boilers together with the flue gases. Fly ash is another source of Si, Al and sometimes Ca.

Other sources of Si, Al and Ca include glass, particularly soda-lime glass, including recycled glass, calcined kaolin, metakaolin, calcined and/or crushed feldspars, nephelines as well as the rocks they occur in, including nephelinite, nepheline syenite, anorthosite, the group of gabbros and the gneisses.

According to the invention, the binder mixture may be a dry alkali activated binder mixture. The fact that the binder mixture is dry means that it comprises less than 20% by weight of free water, usually less than 19% by weight of free water, or less than 16% by weight of free water, or less than 14% by weight of free water, or less than 13% by weight of free water, preferably less than 12% by weight of free water, based on the weight of the binder mixture. The term "free water", as used herein, refers to water that is not bound in the crystal structure or matrix of the ultramafic rock and aluminosilicate precursor, i.e., crystal water, XH₂O.

According to the invention, the binder mixture comprises from 50 to 90% by weight of ultramafic rock, based on the weight of the binder mixture. Further, the binder mixture comprises from 5 to 50% by weight of aluminosilicate precursor, based on the weight of the binder mixture. The ultramafic rock and the aluminosilicate precursor may be present in an amount of less than or equal to 100% by weight of the binder mixture, e.g. less than or equal to 95% by weight, or less than or equal to 90% by weight, or less than or equal to 85% by weight, or less than or equal to 80% by weight of the binder mixture, suitably from 30 to 95% by weight and preferably from 50 to 100% by weight of the binder mixture.

The aluminosilicate precursor of the invention may be calcinated plagioclase. The calcinated plagioclase may contain impurities in an amount of between 0 and 10% by weight, suitably between 0 and 9% by weight and preferably between 0 and 7% by weight of impurities.

Sodium hydroxide (NaOH) is known as lye and caustic soda and is a highly caustic, strong, base. It can be sourced both as a solid and a liquid product where the latter can be utilised in many different molarities. Commercially common sodium hydroxide is a solid monohydrate; NaOH·H₂O.

According to the invention, the alkali activated binder mixture may contain an alkali activator that is selected from NaOH, Na₂SiO₃ (aq), Na₂SiO₃ (anhydrous), KOH, K₂SiO₃, and/or Na₂CO₃., preferably selected from NaOH and/or Na₂SiO₃ (aq). Preferably, the alkali activator comprises sodium silicate. Preferably, the alkali activator is NaOH and/or Na₂SiO₃ (aq).

According to the invention, the alkali activated binder mixture may comprise the alkali activator that is present in an amount of between 0.2 and 55% by weight, suitably between 0.5 and 35% by weight and preferably between 0.9 and 33% by weight, based on the weight of the binder mixture.

Suitably, the alkali activator is present in an amount of between 5 and 17.5 % by weight, based on the weight of the binder mixture, preferably the alkali activator comprises sodium monosilicate in an amount of between 5 and 17.5% by weight, based on the weight of the binder mixture.

Potassium hydroxide (KOH) is a strong base. It can be sourced as a solid and liquid product and the latter can be utilised in many molarities.

Sodium silicates, Na_{2*x*}Si*_{y}*O_{2*y*+*x*} is known as waterglass. Sodium silicates are colour-less glassy or crystalline solids, or white powders. Except for the most silicon-rich ones, they are readily soluble in water, producing alkaline solutions. Sodium monosilicate (anhydrous) (Na₂SiO₃·*n*H₂O (where n = 0, 5, 6, 8, 9)) is the chemical substance with formula Na₂SiO₃ and the anhydrous version of waterglass sold commercially.

Sodium carbonate (anhydrous), Na₂CO₃•XH2O (X=0-10), is a colourless white powder that is easily dissolvable in water. Bicarbonate of soda, NaHCO₃, is also a white powder. Both can create bases when added to water.

According to the invention, the alkali activator modulus (M) may be between 0 and 3, preferably between 0 and 1.5, or from 0 or 0.5 to 1.5 or 1.

According to the invention, the alkali activator (R) may be between 0 and 14, preferably between 1 and 14, or from 1, 3, or 5, to 7.5, 12, or 14, or (R) is at least 5, or at least 7.5.

Suitably, M is between 0 and 1 and R is between 3 and 12, or M = 0 and R is from 3 to 7.5, or M = 0.5 to 1.5 and R is between 5 and 14.

The alkali activator, R, is given by the mass ratio: $R = \frac{Mass of {Na}_{2} O or {K}_{2} O in the alkali activator \times 100}{Mass of the binder mixture ,}$

The activator modulus, M, is the mass ratio given by: $M = \frac{{SiO}_{2}}{{Na}_{2} O} or \frac{{SiO}_{2}}{{K}_{2} O} .$

According to the invention, the process for preparing the alkali activated binder mixture preferably comprises mixing the ultramafic rock in powder form with aluminosilicate precursor in powder form to obtain a binder mixture, and then adding the alkali activator to the binder mixture.

The alkali activated binder slurry according to the invention comprises the alkali activated binder mixture as defined herein, and water, wherein the slurry may have a weight ratio of water to binder of between 0.35 and 0.55. Further, the alkali activated binder slurry may comprise aggregates, wherein the aggregates may be present an amount of between 10 to 80% by weight, suitably between 20 and 75% by weight and preferably between 30 and 70% by weight, based on the weight of the slurry.

The method of making a concrete structure according to the invention may comprise providing the alkali activated binder slurry as defined herein, pouring the alkali activated binder slurry into a form, and curing the slurry, which may take place at a temperature of from 0°C, or from 5°C, or from 15°C to 150°C. Preferably, the method also comprises waiting until the slurry hardens.

According to the invention, the concrete structure may be obtained by the method of the invention as defined herein.

### Examples

The invention is further illustrated in the following examples which, however, are not intended to limit the same. Parts and % relate to parts by weight and % by weight, respectively, and all suspensions are aqueous, unless otherwise stated.

### Example 1

A parametric laboratory study was undertaken to prepare and evaluate alkali activated binders derived from various powder precursors (used singly or in combination). These precursors include waste (glass or clay), by-products of industrial manufacturing processes (GGBS or fly-ash) and olivine.

Five different precursor materials were used: crystalline olivine, glass powder, clay powder, ground granulated blast furnace slag (GGBS), and fly-ash. The olivine was prepared in accordance with the general disclosure and teaching of WO 2019/074373 A1. GGBS was that commonly used in concrete mixture in the UK, marketed as Regen and supplied by Hanson UK. The fly-ash, which was of type N conforming to BS EN 450-1 2005, was obtained from a coal-fired power station in Longannet, Fife, Scotland (supplied by Tarmac). The glass and clay particles were supplied from a waste/recycling station.

The supplied materials were preprocessed to turn them into small particles, and further into fine powders. This was done by first placing a quantity of the material in a hollow steel cylinder and they were then crushed using a steel piston, using a 500kN Denison machine. This turned the broken glass/clay into fine glass/clay particles of various sizes (<4 mm). These particles were then milled down in a small batch of approximately 50 grams using a Tema lab disc mill for 2 minutes, which turned them into fine powders.

To activate these powder precursors, a blend of reagent grade sodium hydroxide (NaOH) and sodium silicate (Na₂SiO₃), with varying values of activator modulus (SiO₂/Na₂O, or M), was used. The mass ratio expressed as a percent of the mass Na₂O in the alkali activator to the mass of the binder (the alkali activator dosage, or R) was varied between 1% and 12.5%.

The alkali activator blend was prepared at least 24 hours prior to being used to allow the blend to return to thermal equilibrium. The blend and all other materials in this example were stored in a temperature-controlled laboratory (20±2°C).

Alkali activated binder slurries were prepared using a 5-litre Hobart planetary motion mixer in a sample preparation laboratory environment at an ambient temperature of 18 ± 3°C. The powder materials were first mixed manually in the mixing bowl. Following this, the alkali solution was added, and the slurry obtained was then mixed for 30 seconds at low speed and for a further 90 seconds at high speed before being mixed for a final 30 seconds at low speed to remove entrapped air.

Tables 1, 2 and 3 present the slurries produced. In most cases, the water/precursor ratio was fixed at 0.44, following the typical w/c ratio used in oil well cementing. Information about the activator modulus, M, and the alkali activator dosage, R, is also presented. The activator modulus, M, is given by (a ratio of weights): $M = \frac{{SiO}_{2}}{{Na}_{2} O} or \frac{{SiO}_{2}}{{K}_{2} O} .$

The alkali activator dosage, R, is given by the mass ratio: $R = \frac{Mass of {Na}_{2} O or {K}_{2} O in the alkali activator \times 100}{Mass of the binder}$

Table 1 shows the alkali activated binder slurries prepared, in which Slurry ID is the slurry identification number, Olivine and Ground Granulated Blast-furnace Slag (GGBS) are shown in relative weight proportions, R and M are as defined in the text above, Free water is the amount of free water of the alkali activated binder mixture prior to mixing with water, and W/B is the weight ratio of water to binder, after mixing with water:

**Table 1**

| **Slurry ID** | **Olivine** | **GGBS** | **Other Binder** | **R** | **M** | **Free Water** | **W/B** |
|---|---|---|---|---|---|---|---|
| 1N | 70 | 30 | 0 | 1 | 0.0 | 0.00 | 0.44 |
| 2N | 70 | 30 | 0 | 1 | 0.5 | 1.10 | 0.44 |
| 3N | 70 | 30 | 0 | 1 | 1.0 | 2.18 | 0.44 |
| 4N | 70 | 30 | 0 | 2 | 0.0 | 0.00 | 0.44 |
| 5N | 70 | 30 | 0 | 2 | 0.5 | 2.15 | 0.44 |
| 6N | 70 | 30 | 0 | 2 | 1.0 | 4.17 | 0.44 |
| 7N | 70 | 30 | 0 | 5 | 0.0 | 0.00 | 0.44 |
| 8N | 70 | 30 | 0 | 5 | 0.5 | 4.96 | 0.44 |
| 9N | 70 | 30 | 0 | 5 | 1.0 | 9.27 | 0.44 |
| 10N | 70 | 30 | 0 | 7.5 | 0.0 | 0.00 | 0.44 |
| 11N | 70 | 30 | 0 | 7.5 | 0.5 | 6.99 | 0.44 |
| 12N | 70 | 30 | 0 | 7.5 | 1.0 | 12.73 | 0.44 |
| 13N | 70 | 30 | 0 | 10 | 1.0 | 8.79 | 0.44 |
| 14N | 70 | 30 | 0 | 10 | 1.0 | 15.65 | 0.44 |
| 15N | 70 | 30 | 0 | 12.5 | 0.5 | 10.40 | 0.44 |
| 16N | 70 | 30 | 0 | 12.5 | 1.0 | 18.16 | 0.44 |
| 17N | 70 | 30 | 0 | 7.5 | 1.25 | 15.23 | 0.44 |
| 18N | 70 | 30 | 0 | 7.5 | 1.5 | 17.53 | 0.44 |
| 19N | 100 | 0 | 0 | 7.5 | 1.0 | 12.73 | 0.44 |
| 20N | 85 | 15 | 0 | 7.5 | 1.0 | 12.73 | 0.44 |

Table 2 similarly shows further alkali activated binder slurries prepared, in which Slurry ID, Olivine, GGBS, R, M, and W/B are as defined for Table 1:

**Table 2**

| **Slurry ID** | **Olivine** | **GGBS** | **Other Binder** | **R** | **M** | **W/B** |
|---|---|---|---|---|---|---|
| 1M | 80 | 20 | 0 | 10 | 1 | 0.5 |
| 2M | 80 | 20 | 0 | 10 | 1 | 0.44 |
| 3M | 80 | 20 | 0 | 10 | 0 | 0.44 |
| 4M | 80 | 20 | 0 | 7.5 | 0 | 0.44 |
| 5M | 80 | 20 | 0 | 5 | 0 | 0.44 |
| 6M | 70 | 30 | 0 | 5 | 0 | 0.44 |
| 7M | 60 | 40 | 0 | 5 | 0 | 0.44 |
| 8M | 100 | 0 | 0 | 5 | 0 | 0.44 |
| 9M | 70 | 30 | 0 | 2 | 0 | 0.44 |
| 10M | 60 | 30 | 10 (Crushed glass) | 5 | 0 | 0.44 |
| 11M | 60 | 30 | 10 (Milled glass) | 5 | 0 | 0.44 |
| 12M | 60 | 30 | 10 (Milled burnt clay) | 5 | 0 | 0.44 |
| 13M | 50 | 30 | 20 (Fly ash) | 5 | 0 | 0.44 |
| 14M | 40 | 30 | 30 (Fly ash) | 5 | 0 | 0.44 |

Table 3 shows further alkali activated binder slurries prepared, in which Slurry ID, Olivine, GGBS, R, M, and W/B are as defined for Tables 1 and 2, and sodium monosilicate (Na₂SiO₃) is shown as relative to the binder by weight:

**Table 3**

| **Slurry ID** | **Olivine** | **GGBS** | **Na₂SiO₃ (anhydrous) wt x 100/binder wt** | **W/B** |
|---|---|---|---|---|
| 1P | 70 | 30 | 7.5 | 0.44 |
| 2P | 70 | 30 | 10 | 0.44 |
| 3P | 70 | 30 | 12.5 | 0.44 |
| 4P | 70 | 30 | 15 | 0.44 |

### Example 2

Some of the alkali activated binder slurries according to Example 1 were evaluated in terms of compressive strength.

Fresh slurries prepared by the procedure according to Example 1 were scooped into their respective cube moulds. Immediately after casting, the cubes were covered with cling film to prevent moisture loss during curing. The cubes were then cured until required for testing: some in a laboratory temperature-controlled environment (20 ± 0.5°C) and the rest in an oven at 40 ± 0.5°C. The cubes were demoulded 1 week after casting and tightly wrapped with many layers of cling film to minimise moisture loss.

The strength development of the cubes was determined using a 3000 kN Avery-Denison testing machine over a 28-day period (i.e., 7, 14 and 28 days after casting).

The results obtained are shown in Tables 4 and 5, in which R, M, Olivine and GBSS are as defined in Example 1, W-glass means waterglass, NaOH means sodium hydroxide, Cube ID means the cube identification number after casting and curing of the corresponding Slurry ID number of Tables 1, 2 and 3, F# means the number of days after casting, (##) means the temperature at which the cubes were cured and stored until the testing compressive strength, Bl. means bleeding.

**Table 4**

| | **Cube ID 4N** | **Cube ID 5N** | **Cube ID 6N** | **Cube ID 7N** | **Cube ID 8N** | **Cube ID 11N** |
|---|---|---|---|---|---|---|
| R | 2 | 2 | 2 | 5 | 5 | 7.5 |
| M | 0 | 0.5 | 1.0 | 0.5 | 1.0 | 0.5 |

| Weight fraction (excluding added water) | | | | | | |
|---|---|---|---|---|---|---|
| Olivine (%) | 0.68 | 0.66 | 0.64 | 0.61 | 0.57 | 0.57 |
| GGBS (%) | 0.29 | 0.28 | 0.28 | 0.26 | 0.24 | 0.25 |
| NaOH (%) | 0.03 | 0.02 | 0.02 | 0.05 | 0.04 | 0.07 |
| W-glass (%) | 0.00 | 0.03 | 0.07 | 0.08 | 0.15 | 0.11 |

| Compressive Strength (MPa) after casting and curing for F#(Days) at (Temperature in °C) | | | | | | |
|---|---|---|---|---|---|---|
| F7 (20) | 7 | 9 | 8 | 13 | 15 | 12 |
| F14 (20) | 8 | 13 | 15 | 14 | 22 | 13 |
| F28 (20) | 10 | 14 | 20 | 16 | 27 | 14 |
| F7 (40) | 4 | 8 | 14 | 11 | 20 | 13 |
| F14 (40) | 5 | 10 | 16 | 13 | 21 | 15 |
| F28 (40) | 5 | 11 | 16 | 16 | 24 | 16 |
| Comment | Bl. | Bl. | Ok | Ok | Ok | Ok |

**Table 5**

| | **Cube ID 12N** | **Cube ID 13N** | **Cube ID 14N** | **Cube ID 16N** | **Cube ID 17N** | **Cube ID 18N** |
|---|---|---|---|---|---|---|
| R | 7.5 | 10 | 10 | 12.5 | 7.5 | 7.5 |
| M | 1.0 | 0.5 | 1.0 | 1.0 | 1.25 | 1.5 |

| Weight fraction (excluding added water) | | | | | | |
|---|---|---|---|---|---|---|
| Olivine (%) | 0.52 | 0.54 | 0.48 | 0.45 | 0.50 | 0.48 |

| | **Cube ID 12N** | **Cube ID 13N** | **Cube ID 14N** | **Cube ID 16N** | **Cube ID 17N** | **Cube ID 18N** |
|---|---|---|---|---|---|---|
| GGBS (%) | 0.22 | 0.23 | 0.21 | 0.19 | 0.21 | 0.21 |
| NaOH (%) | 0.05 | 0.09 | 0.06 | 0.07 | 0.04 | 0.04 |
| W-glass (%) | 0.20 | 0.14 | 0.25 | 0.29 | 0.24 | 0.28 |

| Compressive Strength (MPa) after casting and curing for F#(Days) at (Temperature in °C) | | | | | | |
|---|---|---|---|---|---|---|
| F7 (20) | 22 | 11 | 19 | 18 | 24 | 23 |
| F14 (20) | 25 | 13 | 22 | 17 | 25 | 23 |
| F28 (20) | 30 | 14 | 22 | 17 | 30 | 29 |
| F7 (40) | 27 | 14 | 21 | 13 | 31 | 31 |
| F14 (40) | 27 | 18 | 23 | 18 | 29 | 27 |
| F28 (40) | 29 | 22 | 29 | 21 | 26 | 26 |
| Comment | Ok | Ok | Ok | Ok | Ok | Ok |

As is evident from Tables 4 and 5, the compressive strength of the cubes depends on the weight fraction of olivine and GGBS, and in particular on the alkali activator dosage (R) and activator modulus (M). When comparing cubes having the same activator modulus (M), it is evident that the cubes according to the present invention resulted in higher compressive strength over the cubes (Cube ID Nos. 4, 5, 6) used for comparison.

### Example 3

The procedure of casting and curing according to Example 2 was repeated for some of the alkali activated binder slurries according to Example 1.

The results obtained are shown in Table 6, in which Olivine and Ground Granulated Blast-furnace Slag (GGBS) are shown in relative weight proportions, Na₂SiO₃ means sodium monosilicate which is shown as relative to the binder by weight (wt/binder wt), and Cube ID, F# and (##) are as defined in Example 2.

**Table 6**

| | **Cube ID 1P** | **Cube ID 2P** | **Cube ID 3P** | **Cube ID 4P** |
|---|---|---|---|---|
| R | 3.8 | 5.0 | 6.3 | 7.5 |
| M | 1.0 | 1.0 | 1.0 | 1.0 |
| Olivine | 70 | 70 | 70 | 70 |
| GGBS | 30 | 30 | 30 | 30 |
| Na₂SiO₃ | 7.5 | 10 | 12.5 | 15 |

| Compressive Strength (MPa) after casting and curing for F#(Days) at (Temperature in °C) | | | | |
|---|---|---|---|---|
| F7 (20) | 16 | 19 | 22 | 23 |
| F14 (20) | 22 | 21 | 27 | 21 |
| F28 (20) | 28 | 27 | 27 | 28 |
| F7 (40) | 18 | 20 | 28 | 26 |
| F14 (40) | 21 | 21 | 30 | 29 |
| F28 (40) | 25 | 24 | 27 | 28 |
| Comment | Ok | Ok | Ok | Ok |

It is evident from Table 6 that the alkali activated binder slurries of the invention resulted in concrete structure of the invention with high compressive strength.

### Example 4

The procedure of casting and curing according to Examples 2 and 3 was repeated for some of the alkali activated binder slurries according to Example 1.

The cubes were evaluated in terms of CO₂ emission per ton by calculating the CO₂ emission based on components present in the slurry.

The results obtained are shown in Table 7, in which Olivine, Ground Granulated Blast-furnace Slag (GGBS), W-glass and Na₂SiO₃ are as defined in Examples 1-3, Cube ID is as defined in Example 2, CO₂ emission is indicated in kg/ton for Dry, Slurry and Concrete, wherein Dry means dry binder mixture, Slurry means a slurry prepared by mixing the dry binder mixture with water to a weight ratio of water to binder of 0.44, Concrete means a concrete obtained by adding 75% by weight of aggregates (sand and gravel), based on the weight of the slurry, and ordinary cement refers to an ordinary Portland cement that, when subjected to casting and curing, resulted in a CO₂ emission of 123 kg/ton.

**Table 7**

| | **Cube ID 9N** | **Cube ID 12N** | **Cube ID 14N** | **Cube ID 1P** | **Cube ID 2P** | **Cube ID 3P** | **Cube ID 4P** |
|---|---|---|---|---|---|---|---|
| R | 5 | 7.5 | 10 | 3.8 | 5.0 | 6.3 | 7.5 |
| M | 0 | 0.5 | 1.0 | 1.0 | 1.0 | 1.0 | 1.0 |

| Weight fraction (excluding added water) | | | | | | | |
|---|---|---|---|---|---|---|---|
| Olivine (%) | 0.57 | 0.52 | 0.48 | 0.64 | 0.65 | 0.62 | 0.61 |
| GGBS (%) | 0.24 | 0.22 | 0.21 | 0.27 | 0.28 | 0.27 | 0.26 |
| NaOH (%) | 0.04 | 0.05 | 0.06 | - | - | - | - |
| W-glass (%) | 0.15 | 0.20 | 0.25 | - | - | - | - |
| Na₂SiO₃ (%) | - | - | - | 0.09 | 0.07 | 0.11 | 0.13 |

| CO₂ emission (kg/ton) | | | | | | | |
|---|---|---|---|---|---|---|---|
| Dry | 103.1 | 140.8 | 172.6 | 67.7 | 52.4 | 82.2 | 96.2 |
| Slurry | 76.7 | 114.4 | 150.3 | 50.3 | 39.0 | 61.2 | 71.6 |
| Concrete | 19.2 | 28.6 | 37.6 | 12.6 | 9.7 | 15.3 | 17.9 |

| CO₂ emission compared to an ordinary cement (%) | | | | | | | |
|---|---|---|---|---|---|---|---|
| | 15.6 | 23.2 | 30.5 | 10.2 | 7.9 | 12.4 | 14.5 |

It is evident from Table 7 that the slurry resulting in a concrete according to the invention showed a significantly lower CO₂ emission compared to the standard slurry resulting in the standard concrete.

## Claims

1. A process for preparing an alkali activated binder mixture comprising mixing:
(i) 50 to 90% by weight of ultramafic rock, based on the weight of the binder mixture;
(ii) 5 to 50% by weight of aluminosilicate precursor, based on the weight of the binder mixture, wherein the aluminosilicate precursor is vitreous and/or fine grained ground granulated blast-furnace slag, recycled glass, calcined nepheline, calcined metakaolin calcined anorthosite and/or calcined gabbro;
(iii) an alkali activator;
wherein the ultramafic rock and aluminosilicate precursor are present in an amount of less than or equal to 95% by weight of the binder mixture,
wherein the alkali activator dosage, R, is between 3 and 14, where R is given by the mass ratio: $R = \frac{Mass of {Na}_{2} O or {K}_{2} O in the alkali activator \times 100}{Mass of the binder mixture}$
and wherein the activator modulus (M) is between 0 and 3, where M is given by the mass ratio: $M = \frac{{SiO}_{2}}{{Na}_{2} O} or \frac{{SiO}_{2}}{{K}_{2} O} .$

2. An alkali activated binder mixture comprising:
(i) 50 to 90% by weight of ultramafic rock, based on the weight of the binder mixture;
(ii) 5 to 50% by weight of aluminosilicate precursor, based on the weight of the binder mixture, wherein the aluminosilicate precursor is vitreous and/or fine grained ground granulated blast-furnace slag, recycled glass, calcined nepheline, calcined metakaolin calcined anorthosite and/or calcined gabbro; and
(iii) an alkali activator;
wherein the ultramafic rock and the aluminosilicate precursor are present in an amount of less than or equal to 95% by weight of the binder mixture;
wherein the alkali activator dosage, R, is between 3 and 14, where R is given by the mass ratio: $R = \frac{Mass of {Na}_{2} O or {K}_{2} O in the alkali activator \times 100}{Mass of the binder mixture}$ and
wherein the activator modulus, M, is between 0 and 3, where M is given by the mass ratio: $M = \frac{{SiO}_{2}}{{Na}_{2} O} or \frac{{SiO}_{2}}{{K}_{2} O} .$

3. The process according to claim 1, or the binder mixture according to claim 2, wherein the binder mixture comprises 10 to 50% by weight of aluminosilicate precursor, based on the weight of the binder mixture.

4. The process according to claim 1 or 3, or the binder mixture according to any one of claims 2 to 3, wherein the ultramafic rock and aluminosilicate precursor are present is an amount of less than or equal to 90% by weight of the binder mixture.

5. The process according to any one of claims 1, 3 and 4, or the binder mixture according to any one of claims 2 to 4, wherein the ultramafic rock is peridotite and/or eclogite.

6. The process according to any one of claims 1 and 3 to 5, or the binder mixture according to any one of claims 2 to 5, wherein the ultramafic rock is olivine.

7. The process according to any one of claims 1 and 3 to 6, or the binder mixture according to any one of claims 2 to 6, wherein the aluminosilicate precursor is ground granulated blast-furnace slag.

8. The process according to any one of claims 1 and 3 to 7, or the binder mixture according to any one of claims 2 to 7, wherein the aluminosilicate precursor is calcinated gabbro selected from calcinated plagioclase.

9. The process according to any one of claims 1 and 3 to 8, or the binder mixture according to any one of claims 2 to 8, wherein the binder mixture is dry and comprises less than 20% by weight of free water, based on the weight of the binder mixture.

10. The process according to any one of claims 1 and 3 to 9, or the binder mixture according to any one of claims 2 to 9, wherein the alkali activator is NaOH, Na₂SiO₃ (aq), Na₂SiO₃ (anhydrous), KOH, K₂SiO₃, and/or Na₂CO₃.

11. The process according to any one of claims 1 and 3 to 10, or the binder mixture according to any one of claims 2 to 10, wherein the alkali activator is present in an amount of between 5 and 17.5 % by weight, based on the weight of the binder mixture.

12. The process according to any one of claims 1 and 3 to 11, or the binder mixture according to any one of claims 2 to 11, wherein M is between 0 and 1 and R is between 3 and 12.

13. The process according to any one of claims 1 and 3 to 12, or the binder mixture according to any one of claims 2 to 12, wherein M is between 0.5 and 1.5 and R is between 5 and 14.

14. The process according to any one of claims 1 and 3 to 13, or the binder mixture according to any one of claims 2 to 13, wherein R is at least 5, or at least 7.5.

15. Use of the alkali activated binder mixture according to any one of claims 2 to 14 to prepare an alkali activated binder slurry.

## Patentansprüche

1. Verfahren zur Herstellung einer alkaliaktivierten Bindemittelmischung, umfassend Mischen von:
(i) 50 bis 90 Gew.-% ultramafischem Gestein, basierend auf dem Gewicht der Bindemittelmischung;
(ii) 5 bis 50 Gew.-% Alumosilikatvorläufer, basierend auf dem Gewicht der Bindemittelmischung, wobei der Alumosilikatvorläufer glasige und/oder feinkörnige gemahlene granulierte Hochofenschlacke, Recyclingglas, kalzinierter Nephelin, kalzinierter Metakaolin, kalzinierter Anorthosit und/oder kalzinierter Gabbro ist;
(iii) einem Alkaliaktivator;
wobei das ultramafische Gestein und der Alumosilikatvorläufer in einer Menge von weniger als oder gleich 95 Gew.-% der Bindemittelmischung vorliegen,
wobei die Alkaliaktivatordosierung, R, zwischen 3 und 14 liegt, wobei R durch das folgende Massenverhältnis gegeben ist: $R = \frac{Masse von {Na}_{2} O oder {K}_{2} O im Alkaliaktivator \times 100}{Masse del Bindemittelmischung}$
und wobei der Aktivatormodul (M) zwischen 0 und 3 liegt, wobei M durch das folgende Massenverhältnis gegeben ist: $M = \frac{{SiO}_{2}}{{Na}_{2} O} oder \frac{{SiO}_{2}}{{K}_{2} O} .$

2. Alkaliaktivierte Bindemittelmischung, umfassend:
(i) 50 bis 90 Gew.-% ultramafisches Gestein, basierend auf dem Gewicht der Bindemittelmischung;
(ii) 5 bis 50 Gew.-% Alumosilikatvorläufer, basierend auf dem Gewicht der Bindemittelmischung, wobei der Alumosilikatvorläufer glasige und/oder feinkörnige gemahlene granulierte Hochofenschlacke, Recyclingglas, kalzinierter Nephelin, kalzinierter Metakaolin, kalzinierter Anorthosit und/oder kalzinierter Gabbro ist; und
(iii) einen Alkaliaktivator;
wobei das ultramafische Gestein und der Alumosilikatvorläufer in einer Menge von weniger als oder gleich 95 Gew.-% der Bindemittelmischung vorliegen;
wobei die Alkaliaktivatordosierung, R, zwischen 3 und 14 liegt, wobei R durch das folgende Massenverhältnis gegeben ist: $R = \frac{Masse von {Na}_{2} O oder {K}_{2} O im Alkaliaktivator \times 100}{Masse del Bindemittelmischung}$ und
wobei der Aktivatormodul, M, zwischen 0 und 3 liegt, wobei M durch das folgende Massenverhältnis gegeben ist: $M = \frac{{SiO}_{2}}{{Na}_{2} O} oder \frac{{SiO}_{2}}{{K}_{2} O} .$

3. Verfahren nach Anspruch 1 oder Bindemittelmischung nach Anspruch 2, wobei die Bindemittelmischung 10 bis 50 Gew.-% Alumosilikatvorläufer, basierend auf dem Gewicht der Bindemittelmischung, umfasst.

4. Verfahren nach Anspruch 1 oder 3 oder Bindemittelmischung nach einem der Ansprüche 2 bis 3, wobei das ultramafische Gestein und der Alumosilikatvorläufer in einer Menge von weniger als oder gleich 90 Gew.-% der Bindemittelmischung vorliegen.

5. Verfahren nach einem der Ansprüche 1, 3 und 4 oder Bindemittelmischung nach einem der Ansprüche 2 bis 4, wobei das ultramafische Gestein Peridotit und/oder Eklogit ist.

6. Verfahren nach einem der Ansprüche 1 und 3 bis 5 oder Bindemittelmischung nach einem der Ansprüche 2 bis 5, wobei das ultramafische Gestein Olivin ist.

7. Verfahren nach einem der Ansprüche 1 und 3 bis 6 oder Bindemittelmischung nach einem der Ansprüche 2 bis 6, wobei der Alumosilikatvorläufer gemahlene granulierte Hochofenschlacke ist.

8. Verfahren nach einem der Ansprüche 1 und 3 bis 7 oder Bindemittelmischung nach einem der Ansprüche 2 bis 7, wobei der Alumosilikatvorläufer kalzinierter Gabbro ist, ausgewählt aus kalziniertem Plagioklas.

9. Verfahren nach einem der Ansprüche 1 und 3 bis 8 oder Bindemittelmischung nach einem der Ansprüche 2 bis 8, wobei die Bindemittelmischung trocken ist und weniger als 20 Gew.-% freies Wasser, basierend auf dem Gewicht der Bindemittelmischung, umfasst.

10. Verfahren nach einem der Ansprüche 1 und 3 bis 9 oder Bindemittelmischung nach einem der Ansprüche 2 bis 9, wobei der Alkaliaktivator NaOH, Na₂SiO₃ (aq), Na₂SiO₃ (wasserfrei), KOH, K₂SiO₃ und/oder Na₂CO₃ ist.

11. Verfahren nach einem der Ansprüche 1 und 3 bis 10 oder Bindemittelmischung nach einem der Ansprüche 2 bis 10, wobei der Alkaliaktivator in einer Menge zwischen 5 und 17,5 Gew.-%, basierend auf dem Gewicht der Bindemittelmischung, vorliegt.

12. Verfahren nach einem der Ansprüche 1 und 3 bis 11 oder Bindemittelmischung nach einem der Ansprüche 2 bis 11, wobei M zwischen 0 und 1 liegt und R zwischen 3 und 12 liegt.

13. Verfahren nach einem der Ansprüche 1 und 3 bis 12 oder Bindemittelmischung nach einem der Ansprüche 2 bis 12, wobei M zwischen 0,5 und 1,5 liegt und R zwischen 5 und 14 liegt.

14. Verfahren nach einem der Ansprüche 1 und 3 bis 13 oder Bindemittelmischung nach einem der Ansprüche 2 bis 13, wobei R mindestens 5 oder mindestens 7,5 ist.

15. Verwendung der alkaliaktivierten Bindemittelmischung nach einem der Ansprüche 2 bis 14 zum Herstellen eines alkaliaktivierten Bindemittelschlamms.

## Revendications

1. Processus pour préparer un mélange liant alcali-activé comprenant le mélange de :
(i) 50 à 90 % en poids de roche ultramafique, sur la base du poids du mélange liant ;
(ii) 5 à 50 % en poids de précurseur d'aluminosilicate, sur la base du poids du mélange liant, dans lequel le précurseur d'aluminosilicate est du laitier de haut fourneau granulé vitreux et/ou à grain fin, du verre recyclé, de la néphéline calcinée, de l'anorthosite calcinée au métakaolin calciné et/ou du gabbro calciné ;
(iii) un activateur alcalin ;
dans lequel la roche ultramafique et le précurseur d'aluminosilicate sont présents en une quantité inférieure ou égale à 95 % en poids du mélange liant,
dans lequel la dose d'activateur alcalin, R, est comprise entre 3 et 14, où R est donnée par le rapport de masse : $R = \frac{Masse de {Na}_{2} O ou {K}_{2} O dans l ′ activateur alcalin \times 100}{Masse du mélange liant}$
et dans lequel le module d'activation (M) est compris entre 0 et 3, où M est donné par le rapport de masse : $M = \frac{{SiO}_{2}}{{Na}_{2} O} ou \frac{{SiO}_{2}}{{K}_{2} O} .$

2. Mélange liant alcali-activé comprenant :
(i) 50 à 90 % en poids de roche ultramafique, sur la base du poids du mélange liant ;
(ii) 5 à 50 % en poids de précurseur d'aluminosilicate, sur la base du poids du mélange liant, dans lequel le précurseur d'aluminosilicate est du laitier de haut fourneau granulé vitreux et/ou à grain fin, du verre recyclé, de la néphéline calcinée, de l'anorthosite calcinée au métakaolin calciné et/ou du gabbro calciné ; et
(iii) un activateur alcalin ;
dans lequel la roche ultramafique et le précurseur d'aluminosilicate sont présent en une quantité inférieure ou égale à 95 % en poids du mélange liant ;
dans lequel la dose d'activateur alcalin, R, est comprise entre 3 et 14, où R est donnée par le rapport de masse : $R = \frac{Masse de {Na}_{2} O ou {K}_{2} O dans l ′ activateur alcalin \times 100}{Masse du mélange liant}$ et
dans lequel le module d'activation, M, est compris entre 0 et 3, où M est donné par le rapport de masse :
$M = \frac{{SiO}_{2}}{{Na}_{2} O} ou \frac{{SiO}_{2}}{{K}_{2} O} .$

3. Processus selon la revendication 1, ou mélange liant selon la revendication 2, dans lequel le mélange liant comprend 10 à 50 % en poids de précurseur d'aluminosilicate, sur la base du poids du mélange liant.

4. Processus selon la revendication 1 ou 3, ou mélange liant selon l'une quelconque des revendications 2 à 3, dans lequel la roche ultramafique et le précurseur d'aluminosilicate sont présents en une quantité inférieure ou égale à 90 % en poids du mélange liant.

5. Processus selon l'une quelconque des revendications 1, 3 et 4, ou mélange liant selon l'une quelconque des revendications 2 à 4, dans lequel la roche ultramafique est la péridotite et/ou l'éclogite.

6. Processus selon l'une quelconque des revendications 1 et 3 à 5, ou mélange liant selon l'une quelconque des revendications 2 à 5, dans lequel la roche ultramafique est l'olivine.

7. Processus selon l'une quelconque des revendications 1 et 3 à 6, ou mélange liant selon l'une quelconque des revendications 2 à 6, dans lequel le précurseur d'aluminosilicate est du laitier de haut fourneau granulé broyé.

8. Processus selon l'une quelconque des revendications 1 et 3 à 7, ou mélange liant selon l'une quelconque des revendications 2 à 7, dans lequel le précurseur d'aluminosilicate est du gabbro calciné sélectionné parmi le plagioclase calciné.

9. Processus selon l'une quelconque des revendications 1 et 3 à 8, ou mélange liant selon l'une quelconque des revendications 2 à 8, dans lequel le mélange liant est sec et comprend moins de 20 % en poids d'eau libre, sur la base du poids du mélange liant.

10. Processus selon l'une quelconque des revendications 1 et 3 à 9, ou mélange liant selon l'une quelconque des revendications 2 à 9, dans lequel l'activateur alcalin est NaOH, Na₂SiO₃ (aq), Na₂SiO₃ (anhydre), KOH, K₂SiO₃, et/ou Na₂CO₃.

11. Processus selon l'une quelconque des revendications 1 et 3 à 10, ou mélange liant selon l'une quelconque des revendications 2 à 10, dans lequel l'activateur alcalin est présent en une quantité comprise entre 5 et 17,5 % en poids, sur la base du poids du mélange liant.

12. Processus selon l'une quelconque des revendications 1 et 3 à 11, ou mélange liant selon l'une quelconque des revendications 2 à 11, dans lequel M est compris entre 0 et 1 et R est comprise entre 3 et 12.

13. Processus selon l'une quelconque des revendications 1 et 3 à 12, ou mélange liant selon l'une quelconque des revendications 2 à 12, dans lequel M est compris entre 0,5 et 1,5 et R est comprise entre 5 et 14.

14. Processus selon l'une quelconque des revendications 1 et 3 à 13, ou mélange liant selon l'une quelconque des revendications 2 à 13, dans lequel R vaut au moins 5, ou au moins 7,5.

15. Utilisation du mélange liant alcali-activé selon l'une quelconque des revendications 2 à 14 pour préparer une suspension de liant alcali-activé.
